# DEMANDE DE BREVET EUROPEEN

(11) **EP 3 522 317 A1**
(43) Date de publication de la demande: **07.08.2019**
(21) Numéro de dépôt: 18212871.0
(22) Date de dépôt: 17.12.2018
(51) Int. Cl.: H02G 3/12, H02G 3/08, H02G 3/18

(54) **SUPPORT D'APPAREILLAGE ELECTRIQUE**

(30) Priorité: 01.02.2018 FR 1850860
(71) Demandeur: Legrand France, 87000 Limoges (FR); Legrand SNC, 87000 Limoges (FR)
(72) Inventeur: FERNANDEZ, Marlène, 87570 Rilhac Rancon (FR); BRASSEAU, Boris, 87700 Saint Priest sous Aixe (FR); DELMAS, Simon, 87400 La Geneytouse (FR)
(74) Mandataire: Jacobacci Coralis Harle

(57) **Abrégé**

L'invention concerne un support d'appareillage (100) comportant :
- un cadre (101) qui délimite intérieurement une ouverture d'accueil pour un mécanisme d'appareillage et qui comporte deux branches opposées dans lesquelles sont prévus des orifices de passage (104C) pour des vis de fixation équipant une boîte électrique,
- des pattes (150) présentant chacune une extrémité libre (152) qui est située au droit de l'un desdits orifices de passage, qui est mobile par rapport au cadre et qui est tournée vers l'extérieur, et
- un moyen de rappel de l'extrémité libre de chaque patte vers l'extérieur,

Selon l'invention, l'extrémité libre de chaque patte présente un bord d'appui adapté à venir s'appuyer contre le corps d'une desdites vis de fixation, et dont le rayon de courbure moyen est au moins deux fois supérieur au rayon du corps de la vis de fixation.

## Description

La présente invention concerne de manière générale les appareillages électriques à rapporter dans des parois.

Elle concerne plus particulièrement un support d'appareillage à rapporter sur des vis de fixation d'une boîte électrique, comportant :
- un cadre qui délimite intérieurement une ouverture d'accueil pour un mécanisme d'appareillage et qui comporte deux branches opposées dans lesquelles sont prévus des orifices de passage pour les vis de fixation,
- des pattes présentant chacune une extrémité libre qui est située au droit de l'un desdits orifices de passage, qui est mobile par rapport au cadre et qui est tournée vers l'extérieur, et
- un moyen de rappel de l'extrémité libre de chaque patte vers l'extérieur.

Elle concerne également un appareillage électrique comportant un mécanisme d'appareillage et un support d'appareillage dans lequel est fixé le mécanisme d'appareillage.

L'invention trouve une application particulièrement avantageuse dans la réalisation d'un appareillage électrique dont le mécanisme présente une fonction d'interrupteur, de va-et-vient, de variateur électrique, de prise de courant, de prise réseau (RJ45), de prise de téléphone (RJ11), de prise VDI ou équivalent (HDMI,...), de voyant, de thermostat, ou encore de détecteur (de fumée, d'inondation, de température, de mouvement ou de lumière)...

### ARRIERE-PLAN TECHNOLOGIQUE

Un appareillage électrique comporte généralement trois parties, à savoir:
- un support d'appareillage en forme de cadre à rapporter sur la face avant ouverte d'une boîte électrique,
- un mécanisme d'appareillage (par exemple d'interrupteur ou de prise de courant) à bloquer dans l'ouverture délimitée par le support d'appareillage, et
- une plaque d'habillage à fixer sur le support d'appareillage de telle manière qu'il cache ce dernier et qu'il borde esthétiquement le mécanisme d'appareillage.

Généralement, une boîte électrique comporte deux puits de vissage qui s'élèvent à partir de sa paroi de fond, le long de la face intérieure de sa paroi latérale, et dans lesquels des vis sont partiellement vissées.

La fixation du support d'appareillage sur la boîte électrique peut se faire de diverses façons.

Une première façon est décrite dans le document FR3013159. Elle consiste à équiper un support de deux pattes métalliques flexibles dont les extrémités présentent des encoches.

Grâce à leur flexibilité, les pattes peuvent s'effacer (en s'escamotant vers l'intérieur) lorsqu'elles butent contre les têtes des vis de la boîte sur laquelle le support est rapporté. Cette même flexibilité des pattes leur permet ensuite de venir se placer sous les têtes des vis, de façon à ce qu'une fois vissées, les vis bloquent les pattes et l'ensemble de l'appareillage électrique dans la boîte.

L'inconvénient de cette solution est qu'elle demande à l'installateur de positionner avec un grand soin la boîte électrique dans la paroi, ce qui s'avère en pratique difficile à réaliser. En effet, si la boîte n'est pas correctement installée dans la paroi et qu'elle est légèrement inclinée, ses deux vis se retrouvent légèrement décalées en hauteur l'une par rapport à l'autre si bien que l'ensemble de l'appareillage se trouve aussi incliné une fois installé dans la boîte.

Pour remédier à cet inconvénient, on emploie généralement un autre type de support d'appareillage.

Cet autre type de support d'appareillage comporte, au centre de chacune de ses quatre branches, un orifice en forme de trou de serrure. Chaque orifice présente ainsi une extrémité circulaire propre à permettre le passage des têtes des vis de la boîte, et un corps allongé sur les bords duquel les têtes des vis peuvent venir s'appuyer pour fixer le support à la boîte.

La forme allongée de ces orifices permet d'assurer le réglage angulaire du support par rapport à la boîte. On comprend en effet que si la boîte n'est pas installée exactement d'aplomb dans la paroi, il est nécessaire de rattraper ce défaut en inclinant légèrement le support par rapport à la boîte, ce qui est possible grâce à la forme de ces orifices.

L'inconvénient majeur de cette solution est que, lorsque l'installateur visse le support sur la boîte, il doit prendre un soin particulier pour maintenir le support à l'horizontal, ce qui s'avère en pratique difficile à réaliser lorsque la tête de l'une des vis se trouve à proximité de l'extrémité circulaire de l'un des orifices.

Par ailleurs, pour installer deux appareillages électriques en position juxtaposée (verticalement ou horizontalement), on peut utiliser soit une boîte électrique allongée multiposte, soit deux boîtes électriques monopostes. Par soucis esthétique, on utilise quoiqu'il en soit une seule et unique plaque d'habillage qui vient recouvrir les deux appareillages électriques fixés dans ces boîtes.

Lorsque l'installateur souhaite utiliser deux boîtes électriques monoposte, il doit les installer avec soin, avec un entraxe exactement égal à 71 mm. Cette installation s'avérant toujours difficile à mettre en oeuvre, on constate malheureusement généralement un désaxage entre les boîtes.

Or, la plaque d'habillage est prévue pour se fixer conjointement sur les deux supports d'appareillage fixés sur les deux boîtes électriques. Du fait du décalage entre les deux boîtes électriques, la pose de cette plaque d'habillage n'est alors soit plus possible, soit possible mais en force, ce qui engendre de grosses contraintes mécaniques pouvant aboutir à la rupture des moyens de fixation de la plaque d'habillage sur les deux supports d'appareillage.

### OBJET DE L'INVENTION

Afin de remédier aux inconvénients précités de l'état de la technique, la présente invention propose un nouveau support d'appareillage dont les moyens de fixation à la boîte offrent une plus grande liberté dans le positionnement du support sur la boîte.

Plus particulièrement, on propose selon l'invention un support d'appareillage tel que défini dans l'introduction, dans lequel l'extrémité libre de chaque patte présente un bord d'appui qui est adapté à venir s'appuyer contre le corps de l'une des vis de fixation de la boîte électrique, et dont le rayon de courbure moyen est au moins deux fois supérieur au rayon du corps fileté de la vis de fixation.

L'extrémité libre de chaque patte est ainsi prévue pour être bloquée sous la tête d'une vis de fixation de la boîte. La rigidité de la patte est alors telle que la vis de fixation bloque le support d'appareillage dans la boîte électrique.

Grâce à l'invention, la forme du bord d'appui de chaque patte permet, avant de visser les vis de fixation, de faire pivoter le support d'appareillage par rapport à ces vis en profitant d'un jeu angulaire, ce qui permet d'orienter le support parfaitement à l'horizontal, quand bien même la boîte n'est pas exactement d'aplomb.

Par ailleurs, selon l'invention, chaque patte est montée mobile sur le support pour permettre à son extrémité libre :
- de s'effacer pour laisser passer la tête de la vis au moment où le support est rapporté sur la boîte électrique, et
- de venir automatiquement s'appuyer contre le corps fileté de la vis une fois la tête de vis passée, de façon à pouvoir être bloquée par la tête de vis lorsque cette dernière est ensuite vissée dans son puits de vissage.

Grâce à cette mobilité, la fixation du support d'appareillage sur la boîte peut se faire avec un léger jeu latéral (le centre du support pouvant être décalé légèrement par rapport à l'axe central de la boîte). Ainsi, lorsque deux boîtes électriques voisines sont fixées avec un entraxe ne correspondant pas exactement à celui de la plaque d'habillage, il est possible d'ajuster les postions des deux supports d'appareillage pour que leur entraxe corresponde non pas à celui des boîtes sur lesquelles ils sont rapportés, mais à celui de la plaque d'habillage. L'installation de la plaque d'habillage peut ainsi se faire sans effort.

On notera aussi que lorsqu'une boîte multiposte est utilisée, le support d'appareillage conforme à l'invention reste particulièrement avantageux à utiliser. Il est en effet possible de rapporter conjointement deux supports en position juxtaposée sur une boîte multiposte (il n'est plus nécessaire de monter l'un des supports en le faisant pivoter, puis l'autre des supports en le faisant également pivoter).

D'autres caractéristiques avantageuses et non limitatives du support d'appareillage conforme à l'invention sont les suivantes :
- le rayon de courbure moyen du bord d'appui est supérieur à 6 millimètres ;
- chaque orifice de passage présente une forme oblongue dont la largeur est supérieure, sur une majeure partie de la longueur dudit orifice de passage, au diamètre de la tête de la vis de fixation ;
- chaque orifice de passage présente un contour ouvert sur le bord périphérique extérieur du cadre ;
- chaque orifice de passage présente des dimensions telles que le support d'appareillage, lorsqu'il est engagé sur les corps filetés des vis de fixation, peut pivoter par rapport à la boîte électrique avec une course angulaire d'au moins 10 degrés, ladite course angulaire étant de préférence égale à 16 degrés ;
- il est prévu un rebord arrière qui s'étend à partir du bord de l'ouverture d'accueil du cadre et qui porte lesdites pattes ;
- ledit moyen de rappel comporte une languette élastiquement déformable qui vient de formation avec le rebord arrière et qui s'appuie contre ladite patte ;
- chaque patte est montée pivotante par rapport au cadre ;
- le rebord arrière comporte une âme en matière métallique partiellement recouverte d'une peau en matière isolante ;
- le rebord arrière est entièrement réalisé en polyamide renforcé de fibres de verre, et chaque patte est articulée sur le rebord arrière ;
- chaque patte est articulée sur l'âme du rebord arrière ;
- chaque patte présente une seconde extrémité qui forme une fourche à au moins trois dents incurvées ;
- il est prévu un arbre pivot qui est fixe par rapport au cadre et de part et d'autre duquel s'étendent lesdites trois dents ;
- le cadre comporte deux autres branches opposées dans lesquelles sont prévus d'autres orifices de passage en forme de trous de serrure (ci-après appelées « boutonnières »).

L'invention concerne aussi un appareillage électrique comportant un mécanisme d'appareillage et un support d'appareillage tel que précité, dans lequel est fixé le mécanisme d'appareillage.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un support d'appareillage conforme à l'invention ;
- la figure 2 est une vue de détail de la zone Il de la figure 1 ;
- la figure 3 est une vue schématique en perspective du support d'appareillage de la figure 1, sur laquelle les pattes du support d'appareillage n'ont pas été représentées ;
- la figure 4 est une vue de détail de la zone IV de la figure 3 ;
- la figure 5 est une vue schématique en perspective d'une patte du support d'appareillage de la figure 1 ;
- la figure 6 est une vue schématique en perspective d'une coupe support d'appareillage de la figure 1 ;
- les figures 7 à 9 sont des vues schématiques en coupe d'une partie du support d'appareillage de la figure 1 et d'une partie d'une boîte électrique, qui illustrent trois étapes de l'engagement du support d'appareillage dans la boîte électrique ;
- la figure 10 est une vue schématique avant de deux supports d'appareillage tels que celui illustré sur la figure 1, rapportés sur deux boîtes électriques distinctes ;
- la figure 11 est une vue en coupe selon le plan A-A de la figure 10 ;
- la figure 12 est une vue schématique en perspective de l'âme du support d'appareillage de la figure 1 ; et
- la figure 13 est une vue schématique en perspective d'une variante de réalisation du support d'appareillage de la figure 1.

En préliminaire on notera que les éléments identiques ou similaires des différentes variantes de réalisation de l'invention représentées sur les différentes figures seront, dans la mesure du possible, référencés par les mêmes signes de référence et ne seront pas décrits à chaque fois.

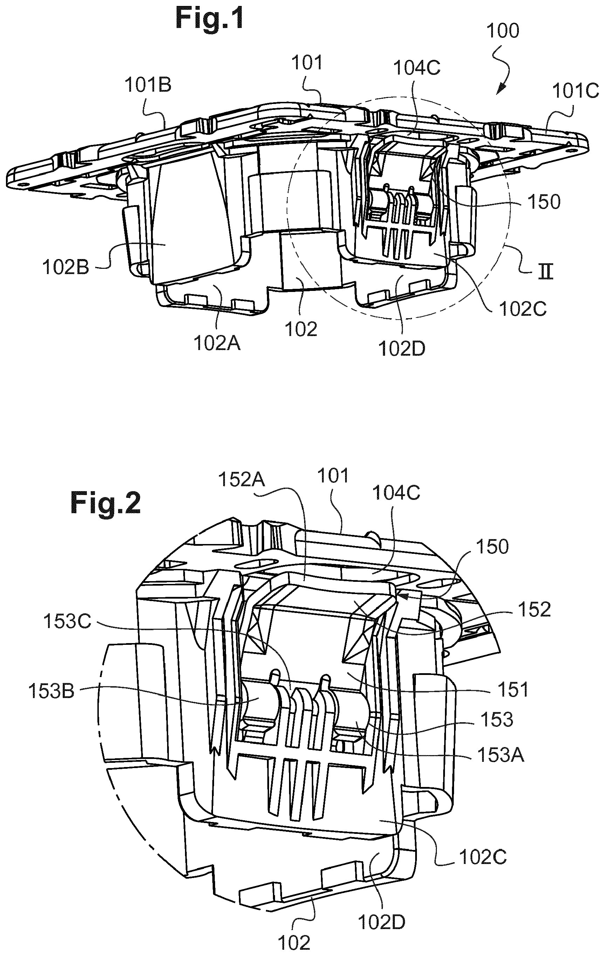

Sur la figure 1, on a représenté de façon isolée un support d'appareillage 100.

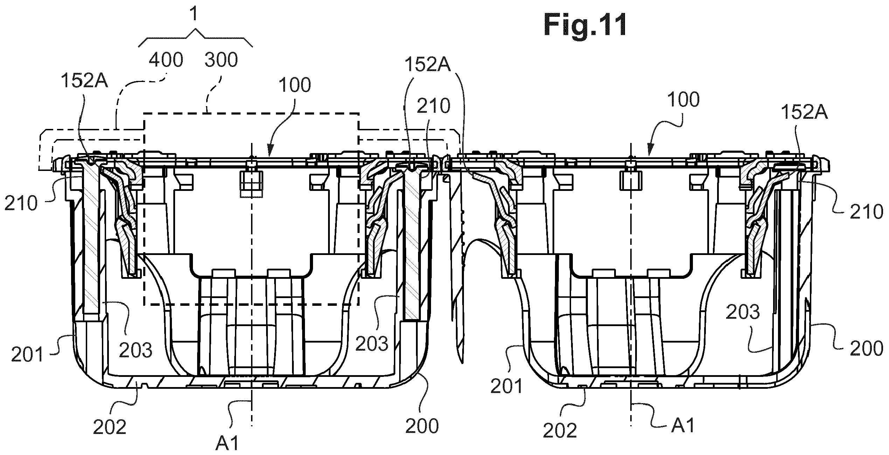

Sur la figure 11, on a représenté ce support d'appareillage 100 en situation. On y observe que ce support d'appareillage 100 est prévu pour se fixer sur une boîte électrique 200 et pour supporter un mécanisme d'appareillage 300 et une plaque d'habillage 400 (le support d'appareillage 100, le mécanisme d'appareillage 300 et la plaque d'habillage 400 formant ensemble un appareillage électrique 1).

A titre préliminaire, on notera que le mécanisme d'appareillage 300 pourrait être de tout type. Il pourrait ainsi s'agir d'un mécanisme d'interrupteur, de va-et-vient, de variateur électrique, de prise réseau (RJ45), de prise de téléphone (RJ11), de voyant, ou encore de détecteur (de fumée, d'inondation, de température, de mouvement ou de lumière).

Dans la description, les termes « avant » et « arrière » seront utilisés par rapport à la direction du regard de l'installateur vers la paroi sur laquelle est rapporté cet appareillage électrique 1, l'avant d'un élément désignant le côté de cet élément qui est tourné vers l'installateur et l'arrière désignant le côté de cet élément qui est tourné vers la paroi.

Comme le montre la figure 11, le support d'appareillage 100 sert au montage du mécanisme d'appareillage 300 à l'intérieur de la boîte électrique 200. Il forme ici une pièce distincte du mécanisme d'appareillage 300. En variante, il pourrait former une seule pièce avec le socle de ce mécanisme d'appareillage.

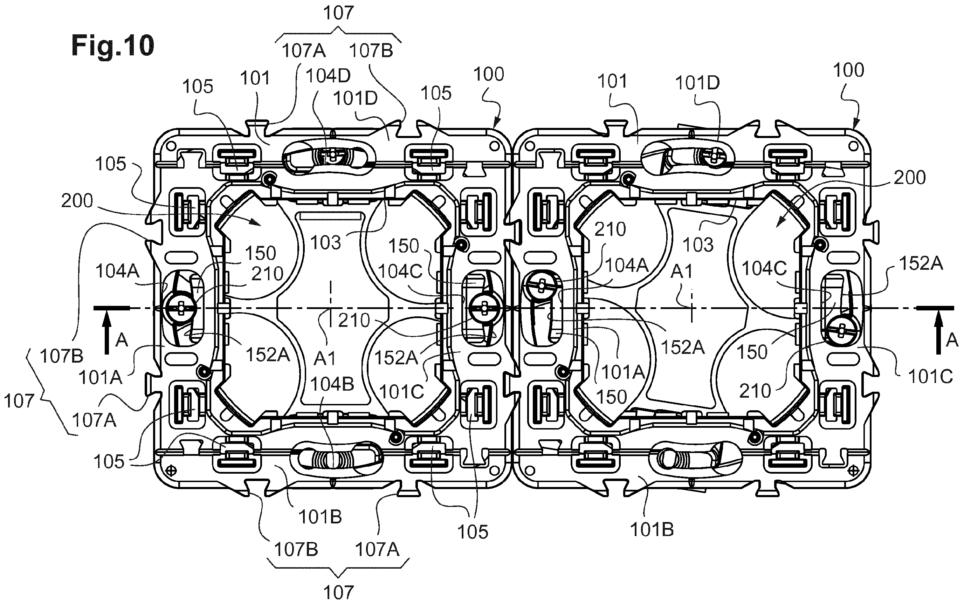

Comme le montre la figure 10, le support d'appareillage 100 comporte un cadre 101 plat et carré, dont le bord intérieur délimite une ouverture d'accueil 103 carrée. La forme du bord de cette ouverture d'accueil 103 est prévue pour permettre d'y encliqueter le mécanisme d'appareillage 300.

Ce cadre 101 présente quatre branches 101A, 101B, 101C, 101D dans chacune desquelles sont prévues des fentes 105 propres à permettre l'accrochage de la plaque d'habillage 400.

Comme le montre bien la figure 1, le support d'appareillage 100 comporte ici en outre un rebord arrière 102 qui s'étend à partir du bord de l'ouverture d'accueil 103 du cadre 101, vers l'arrière.

Ce rebord arrière 102 longe ici l'ensemble du contour de l'ouverture d'accueil 103. Il présente donc quatre flancs 102A, 102B, 102C, 102D plats qui longent chacune des quatre branches 101A, 101B, 101C, 101D du cadre 101 et qui s'étendent perpendiculairement à celles-ci.

Ici, le rebord arrière 102 et le cadre 101 sont formés d'une seule pièce, mais en variante, ils pourraient former des pièces distinctes adaptées à être assemblées par exemple par encliquetage.

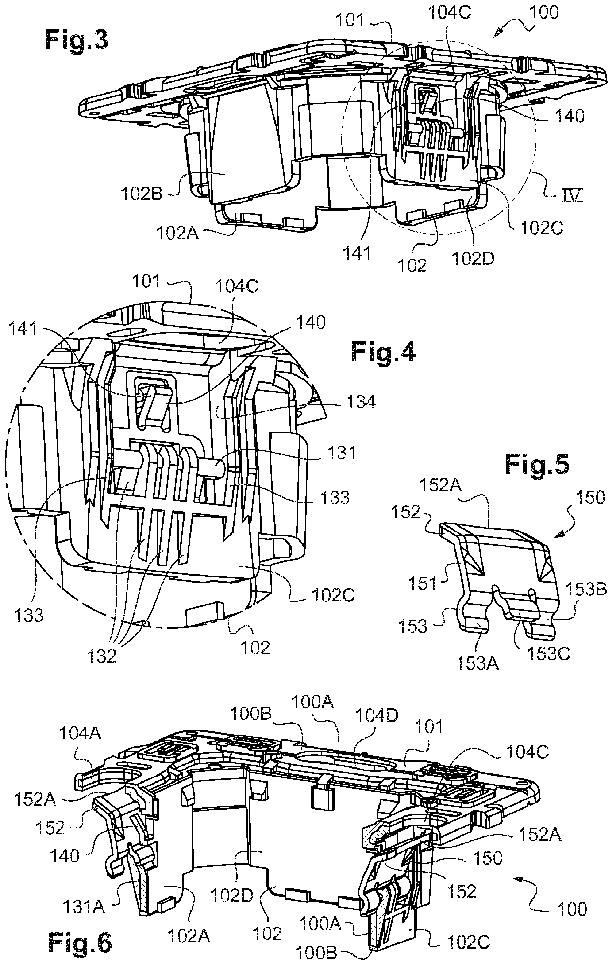

Comme le montre la figure 6, le support d'appareillage 100 comporte préférentiellement une âme 100A en matière métallique partiellement recouverte d'une peau 100B en matière isolante.

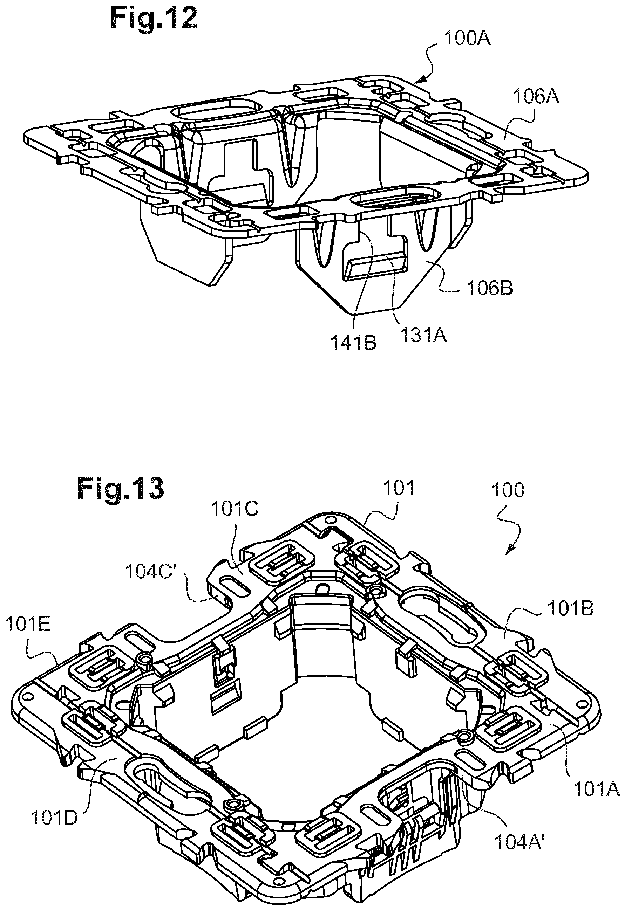

Comme le montre la figure 12 sur laquelle seule l'âme 100A du support d'appareillage 100 a été représentée, cette âme 100A s'étend ici non seulement dans le cadre 101, mais également dans le rebord arrière 102. Elle comporte à cet effet une armature de cadre 106A et une armature de rebord arrière 106B qui s'étendent à l'intérieur de la peau 100B. L'armature de cadre 106A présente une forme de cadre carrée tandis que l'armature de rebord arrière 106B est formée de quatre lames qui s'étendent à partir du bord intérieur de l'armature de cadre 106A, orthogonalement à celle-ci.

On verra dans la suite de cet exposé que l'âme 100A émerge en certaines zones hors de la peau 100B.

En variante, le rebord arrière pourrait être entièrement réalisé en polyamide chargé de fibres de verre. Dans cette variante, le cadre pourra être formé dans la même matière que le rebord arrière ou pourra au contraire comporter une âme métallique recouverte d'une peau en matière plastique isolante.

L'invention porte plus particulièrement sur les moyens permettant de fixer de façon démontable le support d'appareillage 100 sur la boîte électrique 200.

Avant de décrire plus en détail le support d'appareillage 100, on peut donc décrire brièvement la boîte électrique 200, en se rapportant aux figures 10 et 11.

Sur ces figures, on a représenté deux supports d'appareillage 100 identiques, rapportés sur deux boîtes électriques 200 identiques.

Chaque boîte électrique 200 comporte une paroi latérale 201 cylindrique autour d'un axe central A1, fermée à l'arrière par un fond 202. Chaque boîte électrique 200 comporte en outre deux puits de vissage 203 qui s'élèvent à partir du fond 202, le long de la face intérieure de la paroi latérale 201, de façon diamétralement opposée.

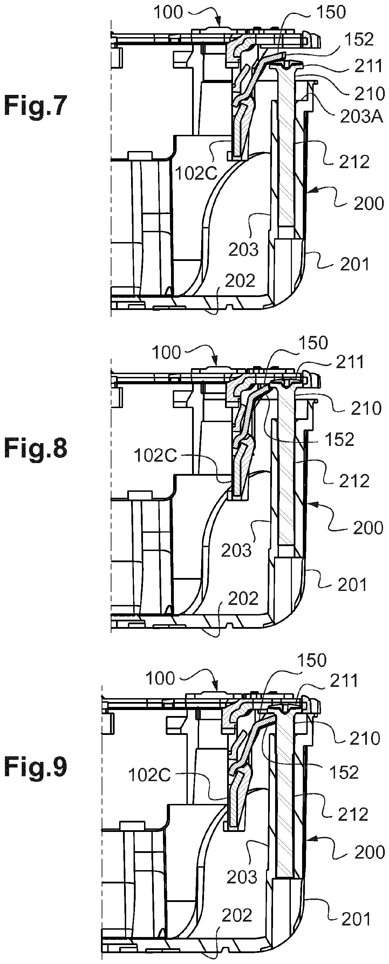

Des vis de fixation 210 sont engagées dans chacun de ces puits de vissage 203. A la livraison des boîtes électriques 200, ces vis de fixation 210 ne sont pas entièrement vissées dans les puits de vissage 203 de façon à ce qu'un espace apparaisse entre les têtes 211 des vis de fixation 210 et les débouchés avant 203A des puits de vissage 203 (voir figure 7).

On observera sur la figure 7 que les débouchés avant 203A des puits de vissage 203 sont situés en retrait du bord avant de la boîte électrique 200 (c'est-à-dire à l'arrière de celui-ci). De cette façon, lorsque les vis de fixation 210 sont complètement vissées dans ces puits de vissage 203, leurs têtes ne dépassent pas à l'avant de la boîte électrique 200.

Ces vis de fixation 210 présentent chacune un corps fileté 212 de diamètre égal à 3 millimètres (ce qui est la norme dans les boîtes électriques) et une tête 211 de diamètre égal à 6 millimètres.

Ces vis de fixation 210 servent à maintenir le support d'appareillage 100 sur la boîte électrique 200.

Comme le montre la figure 10, le cadre 101 du support d'appareillage 100 présente alors, dans deux branches opposées 101A, 101C, des orifices de passage 104A, 104C adaptés à être engagés sur les vis de fixation 210. Ici, il s'agit d' « orifices de passage » en ce sens qu'ils permettent de laisser passer l'intégralité des vis de fixation 210, têtes de vis comprises.

Dans le mode de réalisation représenté sur les figures, chaque orifice de passage 104A, 104C présente un contour fermé et une forme oblongue, allongée selon l'axe de la branche du cadre 101 dans laquelle il se trouve.

Chaque orifice de passage 104A, 104C présente, sur une majeure partie de sa longueur, une largeur supérieure d'au moins un millimètre (ici supérieure de deux millimètres) au diamètre de la tête de la vis de fixation 210.

De cette façon, la tête 211 de chaque vis de fixation 210 peut naviguer librement dans son orifice de passage 104A, 104C, aussi bien dans la longueur que dans la largeur de cet orifice.

Comme le montre la figure 6, le rebord arrière 102 du support d'appareillage 100 est quant à lui équipé, sur deux flancs 102A, 102C opposés, de deux pattes 150 qui présentent chacune une extrémité libre 152 tournée vers l'avant et vers l'extérieur, située au droit de l'un de ces orifices de passage 104A, 104C.

Les extrémités libres 152 de ces pattes 150 sont mobiles par rapport au cadre 101. Pour cela, les pattes 150 sont de façon préférentielle rigides et montées mobiles sur le rebord arrière 102. Par « rigides », on entend que les pattes présentent une amplitude de déformation en flexion qui est inférieure à 10 degrés lors d'une utilisation normale du support d'appareillage.

Le support d'appareillage 100 comporte alors un moyen de rappel 140 permettant de ramener automatiquement l'extrémité libre 152 de chaque patte 150 vers l'extérieur lorsqu'aucun effort n'est exercé sur cette dernière.

Selon une caractéristique particulièrement avantageuse de l'invention, l'extrémité libre 152 de chaque patte 150 présente un bord d'appui 152A qui est adapté à venir s'appuyer contre le corps fileté 212 de la vis de fixation 210 correspondante, et dont le rayon de courbure moyen est au moins deux fois supérieur au rayon du corps fileté 212 de la vis de fixation 210.

Sur les figures 2 et 5, on a représenté en détail l'une de ces pattes 150.

On y observe que chaque patte 150 présente une partie centrale 151 plate prolongée, d'un côté, par ladite extrémité libre 152, et, de l'autre, par une seconde extrémité 153.

Chaque patte 150 est ici réalisée d'une seule pièce en matière métallique, mais en variante, on pourrait employer d'autres matières (par exemple un plastique chargé de fibres de verre).

L'extrémité libre 152 de la patte 150 est plate et inclinée par rapport à la partie centrale 151, vers l'extérieur du support d'appareillage 100.

Comme cela est visible sur la figure 10, le bord d'appui 152A de l'extrémité libre 152 de la patte 150, dont on rappelle qu'il est prévu pour venir s'appuyer contre le corps fileté 212 de la vis de fixation 210, est ici formé par le bord d'extrémité de cette patte 150.

Ce bord d'appui 152A présente ici une forme d'arc de cercle concave dont le diamètre est supérieur à 6 millimètres. Le rayon de courbure de ce bord d'appui est ici compris entre 6 millimètres et un mètre, et est de préférence compris entre 350 et 800 millimètres.

Ainsi, en faisant pivoter le support d'appareillage 100 par rapport à la boîte électrique 200 autour de son axe central A1, il est possible de faire naviguer librement les bords d'appui 152A des deux pattes 150 contre les corps filetés 212 des deux vis de fixation 210 correspondantes.

Dès lors, il est possible de compenser un défaut d'orientation de la boîte électrique 200 dans la paroi, en inclinant à l'inverse le support d'appareillage 100 par rapport à la boîte électrique 200. Les dimensions des orifices de passage 104A, 104C et la largeur des pattes 150 confèrent ici une possibilité de réglage angulaire du support d'appareillage 100 par rapport à la boîte électrique 200 avec une course de plus de 10 degrés autour de l'axe central A1 de la boîte électrique 200. Cette course est ici plus précisément égale à 16 degrés.

Une fois la position du support d'appareillage 100 sur la boîte électrique 200 ajustée, il est possible de visser les vis de fixation 210 de façon à ce que leurs têtes viennent brider les extrémités libres 152 des pattes 150 (c'est-à-dire qu'elles viennent s'appuyer contre ces extrémités libres 152 de façon à les bloquer).

On observe ainsi sur la figure 10, à titre d'exemple illustratif, qu'il est aussi bien possible de fixer le support d'appareillage 100 sur la boîte électrique 200 lorsque cette dernière est positionnée d'aplomb sur la paroi (cas de la boîte électrique de gauche) que lorsque cette dernière est inclinée (cas de la boîte électrique de droite).

Avant de fixer le support d'appareillage 100 à la boîte électrique 200, il est nécessaire de les rapporter l'un sur l'autre en passant les têtes 211 des vis de fixation 210 de la boîte électrique 200 au travers des orifices de passage 104A, 104C du support d'appareillage 100. Le problème, qui est bien illustré sur la figure 7, est que lorsque l'installateur rapporte le support d'appareillage 100 sur la boîte électrique 200, les pattes 150 viennent s'appuyer par leurs extrémités libres 152 sur les têtes 211 des vis de fixation 210.

Pour que les pattes 150 ne forment pas obstacle à l'installation du support d'appareillage 100 sur la boîte électrique 200, elles sont ici montées mobiles en rotation sur les flancs 102A, 102C du rebord arrière 102 du support d'appareillage 100 afin de pouvoir s'escamoter vers l'intérieur (voir figure 8).

Pour cela, comme le montre la figure 5, la seconde extrémité 153 de chaque patte 150 est ici découpée en trois dents incurvées (afin de former une sorte de fourche à trois dents).

L'une de ces dents 153C, celle située entre les deux autres dents 153A, 153B, est repliée d'un côté du plan de la partie centrale 151 de la patte 150, tandis que les deux autres dents 153A, 153B sont repliées de l'autre côté de ce plan. Ces trois dents sont incurvées autour d'un même axe qui passe par ce plan.

Comme le montrent les figures 3 et 4, le flanc 102A, 102C correspondant du rebord arrière 102 du support d'appareillage 100 comporte en correspondance un arbre pivot 131 sur lequel ces dents 153A, 153B, 153C peuvent s'engager afin de former une charnière pour les pattes 150.

Ici, cet arbre pivot 131 est fixé au flanc 102A, 102C correspondant du rebord arrière 102 par ses extrémités et par son centre.

Le centre de cet arbre pivot 131 est en effet connecté au rebord arrière 102 par des nervures de rigidification 132 qui s'étendent en saillie du flanc 102A, 102C.

Les extrémités de cet arbre pivot 131 sont quant à elles fixées à des nervures latérales 133 qui s'étendent perpendiculairement à l'arbre pivot 131 et en saillie du flanc 102A, 102C, et dont on observe qu'elles délimitent ici entre elles un logement 134 pour la patte 150.

De façon préférentielle, comme le montrent les figures 6 et 12, le centre de l'arbre pivot 131 est formé par une partie 131A de l'âme 100A en matière métallique du support d'appareillage 100, afin de conférer à la charnière une solidité maximale.

Les nervures de rigidification 132 forment ici des butées permettant de limiter la course angulaire des pattes 150 autour des arbres pivot 131. On pourra observer alors que, quelle que soit la position angulaire des pattes 150, les extrémités libres 152 de ces pattes 150 seront toujours inclinées vers l'avant par rapport au plan du cadre 101. Elles ne s'étendront en revanche jamais parallèlement au plan du cadre 101, ce qui assurera une meilleure accroche des têtes 211 des vis de fixation 210 aux pattes 150.

Après que la patte 150 s'est escamotée vers l'intérieur (figure 8), il est nécessaire qu'elle se déploie à nouveau vers l'extérieur afin de revenir automatiquement en appui contre le corps fileté 212 de la vis de fixation 210 (figure 9). C'est la fonction du moyen de rappel 140 précité.

Comme le montrent les figures 3 et 4, ce moyen de rappel 140 se présente ici sous la forme d'une languette 141 « découpée » dans la peau 100B du support d'appareillage 100, au niveau du fond du logement 134 de la patte 150. Cette languette 141 se rattache par un seul de ses bords au reste de la peau 100B du support d'appareillage 100, et son bord opposé s'étend en saillie du fond du logement 134, vers l'extérieur. Cette languette 141 est élastiquement déformable. De cette façon, la languette 141 appuie en continu contre la face intérieure de la patte 150 afin de la ramener vers l'extérieur lorsqu'aucun effort n'est exercé sur cette patte 150.

Chaque languette 141 est obtenue directement lors du surmoulage de la peau 100B sur l'âme 100A du support d'appareillage 100 (sans opération de découpage au sens propre du terme). Pour permettre la réalisation par moulage de ces languettes 141, on observe sur la figure 12 que l'armature métallique du rebord arrière 106B présente une ouverture 141B située au niveau où se trouvera la languette 141.

Comme on peut le voir sur la figure 10, le support 100 comporte dans deux autres de ses branches 101B, 101D (celles qui ne sont pas occupées par les orifices de passage 104A, 104C) d'autres moyens d'assujettissement propres à permettre sa fixation à la boîte électrique 200.

Ces autres moyens d'assujettissement pourraient présenter une forme identique à celle des moyens d'assujettissement portés par les deux premières branches 101A, 101C (avec des orifices de passage et des pattes).

Toutefois, ici, ces autres moyens d'assujettissement présentent une forme différente de celles-ci. Ils sont alors utilisables lorsque l'installateur ne souhaite pas ou ne peut pas utiliser les pattes 150.

Ces autres moyens d'assujettissement comprennent, dans chaque autre branche 101B, 101D, une boutonnière 104B, 104D en forme de trou de serrure, qui s'étend globalement selon un arc de cercle centré sur le centre de l'ouverture centrale 103 du support d'appareillage 100 (voir figure 10). Chaque boutonnière 104B, 104D présente ainsi une extrémité circulaire propre à permettre le passage des têtes 211 des vis de fixation 210 de la boîte électrique 200, et un corps allongé sur les bords duquel les têtes 211 des vis de fixation 210 peuvent venir s'appuyer pour fixer le support d'appareillage 100 à la boîte électrique 200.

On remarque sur la figure 6 que la peau 100B forme autour de chaque boutonnière 104B, 104D une surépaisseur et, qu'à cet endroit, l'âme 100A métallique du cadre 101 est apparente. On remarque aussi qu'au contraire, les bords de la peau 100B et de l'âme 100A au niveau de chaque orifice de passage 104A, 104C s'étendent dans le prolongement l'un de l'autre.

Comme le montre plus particulièrement la figure 10, le support d'appareillage 100 comporte, sur chacun des quatre côtés du bord périphérique extérieur de son cadre 101, des moyens d'assemblage 107 à un autre support du même type.

Ici, ces moyens d'assemblage 107 comprennent, en saillie de chaque côté du bord périphérique extérieur du cadre 101, un élément mâle 107A en forme de queue d'aronde, et, en creux dans chaque côté du bord périphérique extérieur du cadre 101, un élément femelle 107B de forme identique en négatif à celle de l'élément mâle 107A.

Comme le montre la figure 10, ces moyens d'assemblage 107 permettent d'associer deux supports d'appareillage 100 identiques en les bloquant l'un contre l'autre (tant qu'ils restent dans le même plan) de telle façon que leurs centres soient distants d'un écart prédéterminé, ici égal à 71 millimètres. Le respect de cet écart permet d'installer une seule et même plaque d'habillage 400 sur les deux supports d'appareillage 100, sans forcer.

Grâce à l'invention, lorsque les boîtes électriques 200 ont été installées avec un défaut d'entr'axe, il demeure possible d'y fixer les deux supports d'appareillage 100. En effet, dans cette configuration illustrée sur la figure 11, les pattes 150 de l'un au moins des deux supports d'appareillage 100 s'inclinent de façon différente, ce qui permet de décentrer le support d'appareillage 100 par rapport à l'axe central A1 de la boîte électrique 200 sur laquelle il est rapporté.

La course angulaire des pattes 150 et la largeur des orifices de passage 104A, 104C sont ici définis de telle sorte qu'il demeure possible de fixer deux supports d'appareillage avec un écart de 71 millimètres lorsque les boîtes électriques 200 sont fixées à la paroi avec un entr'axe compris entre 69 et 73 millimètres.

La présente invention n'est nullement limitée au mode de réalisation décrit et représenté, mais l'homme du métier saura y apporter toute variante conforme à l'invention.

En particulier, les moyens de rappel des pattes vers l'extérieur pourraient être d'un autre type (ressort, lame métallique située entre les flancs et les pattes...).

Sur la figure 13, on a représenté une variante de réalisation du support d'appareillage 100.

Dans cette variante, le support d'appareillage 100 présente une forme identique à celle du support d'appareillage représenté sur la figure 1, à la différence près que ses orifices de passage 104A', 104C' présentent non pas un contour fermé, mais un contour ouvert qui débouche sur le bord périphérique extérieur 101E du cadre 101. Ces orifices de passage 104A', 104C' forment ainsi des sortes d'échancrures de formes rectangulaires dans le bord périphérique extérieur 101E du cadre 101.

Cette variante est particulièrement avantageuse en ce sens que les têtes des vis de fixation 210 de la boîte électrique 200 peuvent bénéficier de davantage d'espace, ce qui augmente le jeu avec lequel il est possible de monter le support d'appareillage 100 sur la boîte électrique 200.

## Revendications

1. Support d'appareillage (100) à rapporter sur des vis de fixation (210) d'une boîte électrique (200), comportant :
- un cadre (101) qui délimite intérieurement une ouverture d'accueil (103) pour un mécanisme d'appareillage (300) et qui comporte deux branches opposées (101A, 101C) dans lesquelles sont prévus des orifices de passage (104A, 104C) pour les vis de fixation (210),
- des pattes (150) présentant chacune une extrémité libre (152) qui est située au droit de l'un desdits orifices de passage (104A, 104C), qui est mobile par rapport au cadre (101) et qui est tournée vers l'extérieur, et
- un moyen de rappel (140) de l'extrémité libre (152) de chaque patte (150) vers l'extérieur,
**caractérisé en ce que** l'extrémité libre (152) de chaque patte (150) présente un bord d'appui (152A) qui est adapté à venir s'appuyer contre le corps d'une desdites vis de fixation (210), et dont le rayon de courbure moyen est au moins deux fois supérieur au rayon du corps de la vis de fixation (150).

2. Support d'appareillage (100) selon la revendication précédente, dans lequel le rayon de courbure moyen du bord d'appui (152A) est supérieur à 6 millimètres.

3. Support d'appareillage (100) selon l'une des revendications 1 et 2, dans lequel chaque orifice de passage (104A, 104C) présente un contour fermé de forme oblongue dont la largeur est supérieure, sur une majeure partie de la longueur dudit orifice de passage (104A, 104C), au diamètre de la tête de la vis de fixation (210).

4. Support d'appareillage (100) selon l'une des revendications 1 et 2, dans lequel chaque orifice de passage (104A', 104C') présente un contour ouvert sur le bord périphérique extérieur du cadre (101).

5. Support d'appareillage (100) selon l'une des revendications précédentes, dans lequel chaque orifice de passage (104A, 104C) présente des dimensions telles que le support d'appareillage (100), lorsqu'il est engagé sur les vis de fixation (210), peut pivoter par rapport à la boîte électrique (200) avec une course angulaire d'au moins 10 degrés, ladite course angulaire étant de préférence égale à 16 degrés.

6. Support d'appareillage (100) selon l'une des revendications précédentes, dans lequel il est prévu un rebord arrière (102) qui s'étend à partir du bord de l'ouverture d'accueil (103) du cadre (101) et qui porte lesdites pattes (150).

7. Support d'appareillage (100) selon la revendication précédente, dans lequel ledit moyen de rappel (140) comporte une languette élastiquement déformable qui vient de formation avec le rebord arrière (102) et qui s'appuie contre ladite patte (150).

8. Support d'appareillage (100) selon l'une des revendications précédentes, dans lequel chaque patte (150) est montée pivotante par rapport au cadre (101).

9. Support d'appareillage (100) selon les revendications 6 et 8, dans lequel le rebord arrière (102) comporte une âme (100A) en matière métallique partiellement recouverte d'une peau (100B) en matière isolante, et dans lequel chaque patte (150) est articulée sur l'âme (100A) du rebord arrière (102).

10. Support d'appareillage selon les revendications 6 et 8, dans lequel le rebord arrière est entièrement réalisé en polyamide renforcé de fibres de verre, et dans lequel chaque patte est articulée sur le rebord arrière.

11. Support d'appareillage (100) selon l'une des trois revendications précédentes, dans lequel chaque patte (150) présente une seconde extrémité (153) qui forme une fourche à au moins trois dents (153A, 153B, 153C) incurvées, et dans lequel il est prévu un arbre pivot (131) qui est fixe par rapport au cadre (101) et de part et d'autre duquel s'étendent lesdites trois dents (153A, 153B, 153C).

12. Support d'appareillage (100) selon l'une des revendications précédentes, dans lequel le cadre (101) comporte deux autres branches opposées (101B, 101D) dans lesquelles sont prévus d'autres orifices de passage (104B, 104D) en forme de trous de serrure.

13. Appareillage électrique (1) comportant un mécanisme d'appareillage (300) et un support d'appareillage (100) conforme à l'une des revendications précédentes, dans lequel est fixé le mécanisme d'appareillage (300).
